Europäisches Patentamt

European Patent Office

Office européen des brevets

(19)

(11) EP 0 808 108 B1

(12) EUROPÄISCHE PATENTSCHRIFT

(45) Veröffentlichungstag und Bekanntmachung des Hinweises auf die Patenterteilung:
31.10.2001 Patentblatt 2001/44

(21) Anmeldenummer: 96900829.1

(22) Anmeldetag: 06.02.1996

(51) Int Cl.⁷: A23F 5/44, A23F 5/06

(86) Internationale Anmeldenummer:
PCT/CH96/00046

(87) Internationale Veröffentlichungsnummer:
WO 96/24256 (15.08.1996 Gazette 1996/37)

(54) **WASSERLÖSLICHES ZICHORIENPULVER, VERFAHREN ZU SEINER HERSTELLUNG UND VORRICHTUNG ZUR DURCHFÜHRUNG DES VERFAHRENS**

WATER-SOLUBLE CHICORY POWDER, A PROCESS FOR MANUFACTURING THE SAID POWDER AND A DEVICE FOR CARRYING OUT THE PROCESS

POUDRE DE CHICOREE SOLUBLE DANS L'EAU, SON PROCEDE DE PRODUCTION ET DISPOSITIF PERMETTANT D'APPLIQUER CE PROCEDE

(84) Benannte Vertragsstaaten:
AT BE CH DE DK ES FR GB GR IE IT LI LU NL PT SE
Benannte Erstreckungsstaaten:
SI

(30) Priorität: 08.02.1995 EP 95101653

(43) Veröffentlichungstag der Anmeldung:
26.11.1997 Patentblatt 1997/48

(73) Patentinhaber: SOCIETE DES PRODUITS NESTLE S.A.
1800 Vevey (CH)

(72) Erfinder:
• LÖHMAR, Karl
D-70825 Korntal (DE)
• GRIMM, Rudi
D-71729 Erdmannhausen (DE)

(74) Vertreter: Thomas, Alain et al
55, avenue Nestlé
1800 Vevey (CH)

(56) Entgegenhaltungen:
EP-A- 0 264 789          DE-C- 297 474
DE-C- 313 361            FR-E- 52 337
FR-E- 53 526             US-A- 1 933 049

• DATABASE FSTA INTERNATIONAL FOOD INFORMATION SERVICE (IFIS), FRANFURT/MAIN, DE 87-08-h0129, F. NAKHMEDOV ET AL.: "New technology for production of soluble coffee substitutes based on chicory" XP002007131 & PISHCHEVEEYA I PERERABATYVAYUSHCHAYA PROMYSHLENNOST, Nr. 11, 1985, Seiten 30-32,
• CHEMICAL ABSTRACTS, vol. 94, no. 7, 16.Februar 1981 Columbus, Ohio, US; abstract no. 45793t, F. NAKHMEDOV ET AL.: "Effect of roasting on physicochemical and technological indexes of chicory" XP002007130 & KONSERVN. OVOSHCHESUSH. PROM-ST., Nr. 111, 1980, Seiten 22-23,
• DATABASE WPI Week 9221 Derwent Publications Ltd., London, GB; AN 92-174141 XP002007132 & SU,A,1 658 969 (KIEV FOOD IND TECHN)

**Beschreibung**

Die Erfindung betrifft ein wasserlösliches karamelisiertes Zichorienextraktpulver, sowie ein Verfahren zur Herstellung dieses Pulvers und die Vorrichtung zur Durchführung des Verfahrens.

Die heutzutage auf dem Markt vorhandenen wasserlöslichen Zichorienpulver sind betreffend sensorischen Eigenschaften nicht zufriedenstellend und weisen eine zu hohe Hygroskopizität auf. Bei der herkömmlichen Verarbeitung ist die Röstung ein schwer zuführender Prozess. Der thermische Abbau des Kohlenhydrats, die Pyrolyse des Inulins der Zichorie, verläuft exotherm. Im Röster werden kleinere Zichorienstücke schneller geröstet, sie sind deshalb dunkler als grössere oder z. T. verbrannt. Grössere Zichorienstücke sind im Kern dunkler als aussen. Diese ungleichmässige Röstung wirkt sich nachteilig auf den Geschmack der Zichorienextrakte aus. Ferner wird bei der Röstung und der Extraktion das Inulin der Zichorie zu Fructose und Glucose aufgespalten. Die Aufspaltung des Inulins muss in gewissen Grenzen gehalten werden, damit der erhaltene Extrakt nicht zu hygroskopisch ist. Um Röstzichorien-Extrakte überhaupt trocknen zu können, muss bei der Sprühtrocknung die Abluftfeuchte und damit die Kapazität der Türme verringert werden. Bei längerer Betriebszeit treten im Turm Anbackungen auf, die zu Substanzverlusten führen.

Der Erfindung liegt die Aufgabe zugrunde, ein wasserlösliches Zichorienpulver zu finden, das gute sensorische Eigenschaften und verringerte Hygroskopizität aufweist.

Die Erfindung betrifft ein wasserlösliches, karamelisiertes Zichorienextraktpulver das zwischen 40 und 65 % Inulin, zwischen 4 und 10 % reduzierende Zucker, weniger als 5 % Fructose und Glucose enthält, und das eine Farbtiefe zwischen 1,0 und 2,5 aufweist .

Die Zichorie enthält als Reserve-Kohlenhydrat Inulin, das aus den Monosacchariden Fructose und Glucose aufgebaut ist. Das Polysaccharid Inulin hat keine reduzierenden Endgruppen und weist deshalb kein Reduktionsvermögen auf. Bei der Extraktion wird das Inulin aus der Zichorie gelöst und bei höheren Temperaturen zu Oligo- und Disacchariden, bis hin zu Fructose und Glucose aufgespalten. Das Reduktionsvermögen steigt dadurch an und ist für die Monosaccharide am grössten. Die Bestimmung der reduzierenden Zucker basiert auf dem Reduktionsvermögen der Saccharide und nimmt in dem Masse zu, wie die durchschnittliche Molekülmasse der Saccharide abnimmt. Die Fructose und Glucose werden direkt, das Inulin nach Säurehydrolyse enzymatisch bestimmt. Die Farbtiefe ist die Extinktionsmessung mit einem Licht von 500 nm durch eine 1%ige wässrige Lösung des Zichorienpulvers in einer Küvette von 1 cm Schichtdicke.

Wenn der Gehalt an reduzierenden Zuckern in Zichorienpulver vor der Karamelisierung unterhalb 4 liegt, d. h. in nicht hydrolysierten Extrakten, weist das hergestellte karamelisierte Pulver ein strengen, rauhen Geschmack auf. Wenn der Gehalt an reduzierenden Zuckern in Zichorienpulvern vor der Karamelisierung zwischen 5 und 8 % liegt, d. h. in teilhydrolisierten Extrakten, hat das Pulver einen milden angenehmen Geschmack. Mit der hydrolytischen Aufspaltung des Inulins nimmt die Hygroskopizität der Extraktpulver zu. Die Inulin-Aufspaltung darf nur soweit geführt werden, dass die Pulver sich ohne Schwierigkeiten trocknen lassen und für die vorgesehene Produktanwendung eine ausreichende Stabilität besitzen. Ein Inulingehalt zwischen 40 und 65% führt zu einer verringerten Hygroskopizität des Pulvers.

Mit dem erfindungsgemässen Pulver kann man den Anteil des Pulvers in Rezepturen höher stellen. Man kann bis zu 50% Zichorienpulver verwenden, z.B. in einer Mischung mit Kaffeeextrakt. Bevorzugt ist ein wasserlösliches Zichorienpulver, das zwischen 50 und 65% Inulin, zwischen 6 und 9 % reduzierende Zucker, und weniger als 4% Fructose und Glucose enthält und das eine Farbtiefe zwischen 1,2 und 1,8 aufweist. Wenn man von einer Mischung mit Kaffee-Extrakt ausgeht, kann dieser Extrakt entweder ein normaler Instantröstkaffee sein, der mit dem erfindungsgemässen Pulver gemischt bzw. agglomeriert wird, oder ein normaler Instantröstkaffee in flüssigem Zustand, der mit dem erfindungsgemässen Pulver gemischt, getrocknet bzw. agglomeriert wird.

Die Erfindung betrifft weiter das Verfahren zur Herstellung des Pulvers, indem man grüne Darrzichorie mit Wasser extrahiert,oder Wurzelzichorie raspelt, abpresst, den Extrakt zu einem Pulver trocknet und das Pulver in einem Extruder zwischen 180°C und 250°C bei Verweilzeiten bis zu 5 Minuten auf eine Farbtiefe zwischen 1,0 und 2,5 karamelisiert, kühlt und mahlt. Der Durchsatz des Zichorienpulvers durch den Extruder richtet sich nach dessen Grösse.

Die konventionelle Verarbeitung der Zichorie umfasst die Prozessschritte Rösten, Extrahieren und Trocknen. Die Nachteile dieses Verfahrens sind einerseits die Ungleichmässigkeit der Farbe des Röstguts, die Gefahr des Verbrennens von Zichorieteilen und andererseits die Hygroskopizität der Extraktpulver.

Wir arbeiten umgekehrt, d.h. wir extrahieren das Darrgut oder pressen Wurzelgut erst ab, trocknen den gewonnenen Extrakt und karamelisieren darauf das Zichorienpulver in einem Extruder. Gedarrte Zichorie kann sowohl in Schnitzel-, Würfel- oder Griessform verwendet werden. Unter Schnitzel, Würfel- oder Griess versteht man Zichorienstücke einer Grösse von 20 bis 40 mm Breite, 5 bis 7 mm Dicke und unterschiedlicher Länge, resp. 12 bis 25 mm Kantenlänge, resp. einen abgesiebten Feinanteil von >2 bis < 10 mm. Wegen der kleineren Schnittgrösse ist die Extraktionsausbeute mit Griess grösser als mit Würfeln und Schnitzeln. Durch die Verarbeitung im Extruder erhält man einen Karamelisierungsgrad der Zichorienpulver, welcher über einen weiten Bereich genau einstellbar ist und durch eine gute Gleichmässigkeit in der Farbe des karamelisierten Pulvers gekennzeichnet ist. Bei der Karamelisierung verwendet man einen Doppelschneckenextruder.

Die Extraktion der Darrzichorie (etwa 90 % Trockensubstanz) erfolgt in einem Extraktor, mit mehreren Diffuseuren, in denen sich die Zichorie befindet. Das auf 80-90°C geheizte Wasser fliesst durch diese Diffuseure und der flüssige Extrakt geht dann in einem Separator, in dem die nicht gelösten Feststoffe abgetrennt werden. Der Rückstand der Diffuseure wird verworfen. Man unterzieht den Wasserextrakt einer Nacherhitzung bei 110-130°C in einem Rohrextraktor, um eine teilweise Hydrolyse des Inulins zu erreichen. Beim Ausgang vom Rohrsystem weist der Extrakt eine Temperatur zwischen 60 und 80°C auf. Die Trocknung des Flüssigextraktes geschieht dann normalerweise mit Heissluft in einem Sprühturm.

Eine weitere Verarbeitungsmöglichkeit besteht darin, dass durch Pressen der frischen Zichorienwurzeln (etwa 26 % Trockensubstanz) die Extraktstoffe abgetrennt werden. Die gewaschenen Zichorienwurzeln werden fein zerschnitten, in einer Dämpfschnecke auf Temperaturen von 60 bis 70°C erhitzt und in einer Presse abgepresst. Wie bereits beschrieben, wird anschliessend der erhaltene Pressextrakt in einem Rohrextraktor bei Temperaturen von 110-130°C nacherhitzt. Durch diese thermische Behandlung wird die Teilhydrolyse des Inulins erreicht und die Extrakt-Viskosität wesentlich abgesenkt. Das Separieren der Flüssigextrakte erfolgt deshalb nach der Hydrolyse. Zum Schluss werden die Flüssigextrakte von etwa 20 % bis auf 40 % Trockensubstanz aufkonzentriert und sprühgetrocknet.

Das grüne Pulver hat einen Gehalt an reduzierenden Zuckern im Bereich von 5 bis 8 %, damit das Pulver leichter zu karamelisieren ist als nicht hydrolysiertes Pulver. Das Temperaturprofil beim Karamelisieren muss unter 250°C liegen, da sonst vermehrt Trübstoffe gebildet werden, die den Geschmack der Zichorienpulver nachteilig beeinflussen. Die Karamelisierung findet vorzugsweise zwischen 200 und 240°C und bei Verweilzeiten bis 2 Minuten statt. Der Durchsatz des Zichorienpulvers durch den Extruder wird so eingestellt, dass die gewünschte Farbtiefe erreicht wird.

Es ist auch möglich, Zichorie zu extrahieren, eine Mischung des grünen Extraktpulvers mit Instantröstkaffee und/oder Instantröstersatzkaffee herzustellen und diese Mischung im Extruder zu karamelisieren. Der Gehalt an Instantröstkaffee bzw. Instantröstersatzkaffee in dieser Mischung liegt zwischen 5 und 95%.

Ein ähnliches Verfahren wie für Zichorie kann auch für Kaffee angewandt werden. Grüner Kaffee wird extrahiert und das lösliche Pulver in einen Extruder karamelisiert. Anschliessend werden die beiden erhaltenen karamelisierten Pulver von Zichorie und Kaffee in einem gewünschten Verhältnis gemischt.

Eine weitere Lösung ist, dass eine separate Extraktion von Kaffee und Zichorie durchgeführt wird und die beiden grünen Pulver gemischt und zusammen in den Extruder karamelisiert werden.

Für diese beiden letzteren Lösungen kann man einen Gehalt von Kaffee zwischen 5 und 95% und von Zichorie zwischen 5 und 95% wählen.

Die Erfindung betrifft schliesslich die Vorrichtung zur Durchführung des Verfahrens bestehend aus folgenden durch Rohrleitungen verbundenen Elementen :

- einem Extraktor (Diffuseure) oder einer Mühle, Dämpfschnecke und Presse,
- einem Separator,
- einem Rohrsystem mit Mitteln zum Erhitzen des Flüssigextraktes,
- einem Mittel zum Trocknen und für die Karamelisierung,
- einem Schneckendosierer,
- einem Doppelschneckenextruder,
- einem Kühlband und
- einem Mittel zum Mahlen.

Die Vorrichtung wird näher beschrieben in Verbindung mit den Zeichnungen, wobei

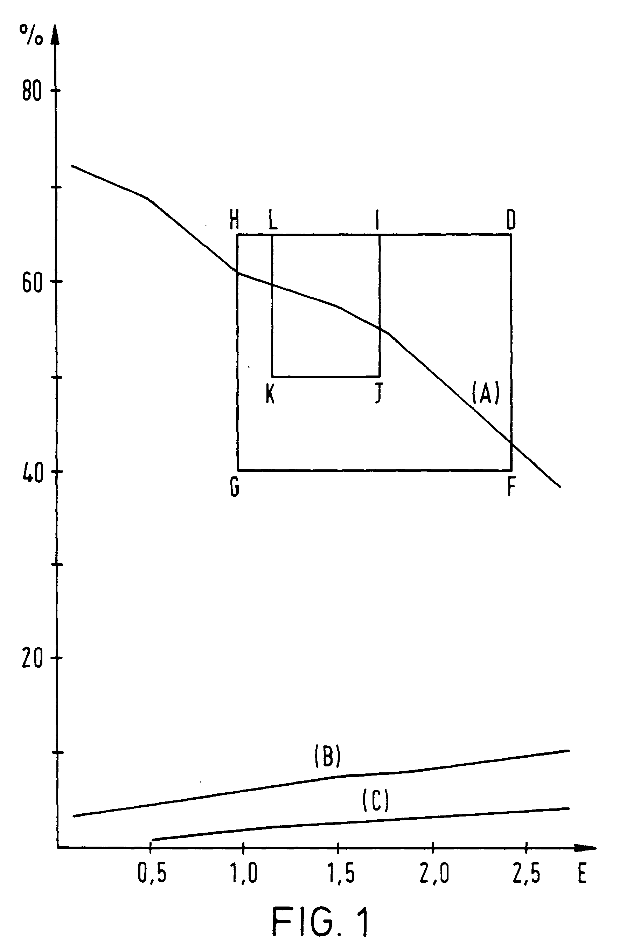

Fig. 1 die Kurven der Variation des Gehalts an Inulin, reduzierenden Zuckern und der Summe aus Fructose und Glucose zeigt,

Fig. 2 und 3, zwei schematische Darstellungen der erfindungsgemässen Vorrichtung vor der Karamelisierung zeigen, und

Fig. 4 eine schematische Darstellung der Karamelisierung des grünen Zichorienpulvers zeigt.

In Fig . 1 geben die Kurven ( A ), ( B ), ( C ) die Variation des Gehalts von Inulin resp. reduzierendem Zucker resp. Fructose und Glucose im karamelisierten Zichorienpulver in Abhängigkeit der Farbtiefe E wieder. Wie schon oben erwähnt, ist die Farbtiefe die Extinktionsmessung eines Lichtes von 500 nm in einer 1%igen wässrigen Lösung des Zichorienpulvers in einer Kuvette von 1 cm Schichtdicke .

Wir beanspruchen das Zichorienpulver mit Eigenschaften im Bereich DFGH, vorzugsweise im Bereich IJKL, was Inulin, reduzierende Zucker, die Summe von Fructose und Glucose sowie die entsprechende Farbtiefe betrifft .

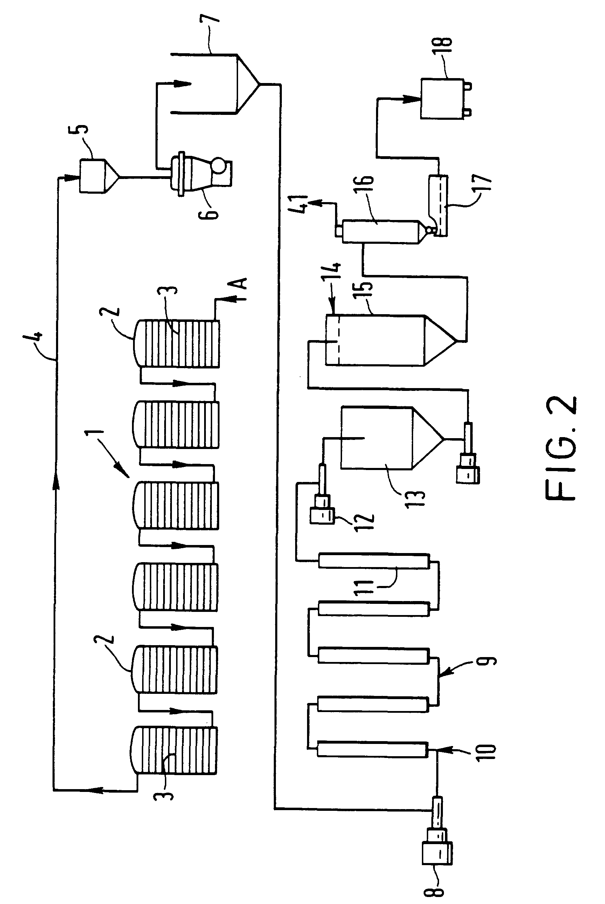

Die Vorrichtung von Fig. 2 betrifft einen Extraktor (1), der aus 6 Diffuseuren (2) besteht. Jeder Diffuseur ist mit Zichorien-Schnitzel, -Würfel oder -Griess (3) beladen. Das warme Wasser von ca. 90°C fliesst gemäss Pfeil A. Der Abzugsextrakt fliesst durch das Rohr (4) zur Entlüftung in einen Ueberlaufbehälter (5) und dann in den Separator (6), wo die unlöslichen Feststoffe abzentrifugiert werden. Die Pumpe (8) fördert den flüssigen Extrakt vom Zwischenlagerbehälter (7) in den Rohrreaktor (9), in dem ein Druck von ca. 5 bar herrscht. Die Aufheizung auf ca. 115-120°C erfolgt mittels Dampf (10) beim Eintritt in den Rohrreaktor. Der flüssige Extrakt strömt durch die ersten vier Rohre und wird nach einer Verweilzeit von 20 bis 25 Minuten in dem Rohrkühler (11) auf ca. 85°C abgekühlt. Ueber die Pumpe (12) gelangt der flüssige Extrakt in einen weiteren Zwischenlagerbehälter (13), wird anschliessend in einem Turm (15) zerstäubt und in einem Heissluftstrom (14) getrocknet. Das Pulver wird im Abscheider (16) von der mitgeführten Luft getrennt, im Nachkühler (17) weiter abgekühlt und in Containern (18) für die Karamelisierung gesammelt.

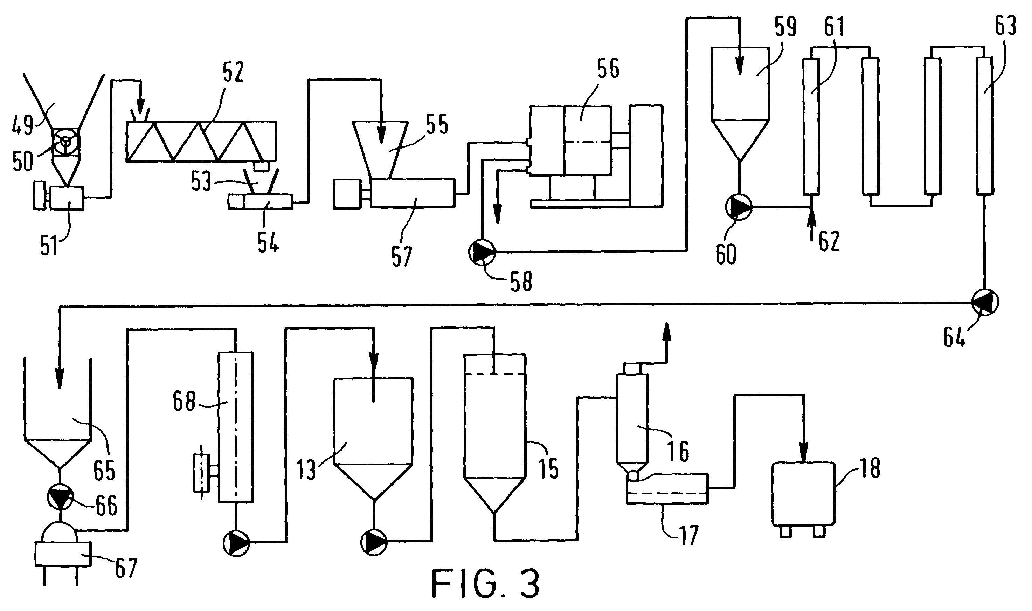

Die Vorrichtung in Fig. 3 betrifft einen Vorratsbehälter (49), eine Mühle (50) zum Schneiden der gewaschenen Zichorienwurzeln. Das Schnittgut wird mit einer Mohnopumpe (51) in die Dämpfschnecke (52) gefördert und mit Direktdampf auf 60-70°C erhitzt. Am Ende der Dämpfschnecke fällt das Zichorien-Schnittgut in den Einlauftrichter (53) einer weiteren Mohnopumpe (54) und wird in einem Vorratsbehälter (55) gesammelt. Die hydraulische Kolbenpresse (56) wird chargenweise mit einer Pumpe (57) befüllt und der abfliessende Pressextrakt mit einer Pumpe (58) in einem Behälter (59) gefördert. Von da aus gelangt der Flüssigextrakt mit einer Pumpe (60) in den Rohrreaktor (61), wird mit Direktdampf (62) auf 130°C erhitzt und nach einer Verweilzeit von 10 Min. in dem Rohrkühler (63) auf 85°C abgekühlt, über die Pumpe (64) gelangt der Flüssigextrakt in einen weiteren Vorratsbehälter (65). Zur Entfernung der Trübstoffe läuft der Flüssigextrakt über eine weitere Pumpe (66) und den Separator (67) und wird im Eindampfer (68) von etwa 20 % Trockensubstanz auf 35-40 % Trockensubstanz aufkonzentriert. Danach wird der Flüssigextrakt aus dem Behälter (13), wie bereits oben beschrieben, sprühgetrocknet (vgl . Fig . 2).

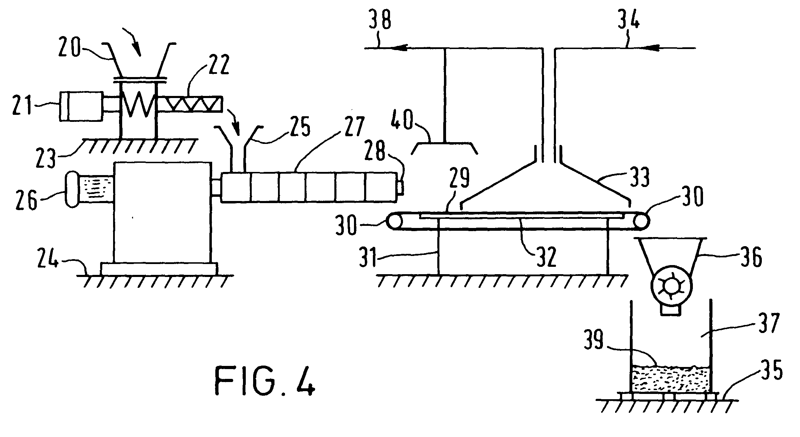

Die Förderung des Zichorienpulvers vom Trichter (20) bis zu dem Karamelisierungsextruder (27) in Fig. 4 erfolgt über einen Schneckendosierer (22) der mittels Motor (21) angetrieben ist. Der Dosierer (22) steht auf Boden (23) und der Extruder (27) unten auf Boden (24).

Vom Dosierer (22) kommt das Pulver mittels Trichter (25) in das erste Segment des Extruders (27) . Man verwendet einen Doppelschneckenextruder mit sechs oder mehr Segmenten und der mit Motor (26) angetrieben ist. Die Segmente drei bis sechs bzw. einschliesslich aller weiteren, werden mit externen Heizgeräten und zirkulierendem Thermoöl (nicht gezeigt) auf Temperaturen von ca. 200°C beheizt. Man erreicht durch eingebaute linke Knetelemente eine Plastifizierung des Zichorienpulvers zwischen dem ersten und dritten Segment.In der Heisshaltezone steigt der innere Druck durch die Bildung von Kohlendioxid an. Es wird ein homogen aussehender, karamelisierter Extrakt ohne weisse Stippen erhalten.

Nach Durchströmen der Düsen (28) fällt der heisse, viskose Zichorienextrakt auf ein Band (29), das zwischen zwei Walzen ( 30) läuft . Das Band steht mittels Rahmen (31) auf dem Boden (24) und weist mit Sole von 15°C durchströmte Kühlkammern (32) auf. Der Extrakt wird durch eine oben auf dem Band liegende rotierende Walze zu einer dünnen Schicht ausgepresst und abgekühlt, so dass eine ungleichmässige Nachkaramelisierung verhindert wird. Die weitere Kühlung des Zichorienextrakts erfolgt von oben (33) mit Gebläse-Druckluft (34). Das karamelisierte Produkt wird am Ende des Bandes (29) entfernt und mit einem Zerkleinerer (36) vermahlen. Die bei der Karamelisierung gebildeten Gase werden oberhalb des Bandes durch Leitung (38) abgesaugt. Das Pulver (39) fällt in den Behälter (37), der auf dem Boden (35) steht.

Bei konstantem Temperaturprofil der Extrudersegmente ist der Karamelisierungsgrad des Zichorienextraktes abhängig von der Durchsatzmenge. Ein dunkleres Zichorienpulver wird bei niedrigen Durchsätzen und ein helleres bei höheren Durchsätzen erhalten.

Bei der Karamelisierung von nicht hydrolysierten Zichorienpulvern (weniger als 4 % reduzierende Zucker) werden vor allem bei höheren Farbtiefen im stärkeren Umfang Trübstoffe gebildet, die einen herben und strengen Geschmack dieser Extrakte verursachen sowie zu einem Belegen im Mund führen.Die aus teilhydrolysierten Zichorienpulvern (zwischen 5 und 8 % reduzierende Zucker) hergestellten karamelisierten Extrakte haben dagegen einen milden und angenehmen Geschmack, ferner enthalten sie im geringeren Umfang Trübstoffe.

Das erfindungsgemässe Zichoriepulver weist gute sensorische Eigenschaften, eine geringere Hygroskopizität und eine gute Gleichmässigkeit der braunen Farbe auf. Man kann deswegen höhere Anteile des löslichen Zichorienpulvers in Rezepturen einsetzen, und die hergestellten Fertigprodukte haben eine bessere Stabilität während der Lagerung und nach Anbruch.

Im Folgenden sind die Literaturstellen aufgeführt, die die analytischen Methoden beschreiben, die zur Untersuchung der Zichorienpulver angewandt worden sind. Die Bestimmung der reduzierenden Zucker wurde komplexometrisch nach Potterat-Eschmann durchgeführt. Der Gehalt der reduzierenden Zucker gibt die Gesamtheit aller reduzierenden Endgruppen der Inulin-Saccharide berechnet als g Fructose pro 100 g Trockensubstanz an. Diese Methode ist im Handbuch der Lebensmittelchemie II/2, 352 (1967) und im Schweizerischen Lebensmittelbuch, erster Band, Seite 562 (1964) dargelegt. Die Fructose und die Glucose wurden in den Zichorienextraktpulvern enzymatisch bestimmt, die Durchführung ist in der Firmenschrift von Boehringer Mannheim "Methoden der biochemischen Analytik und Lebensmittelanalytik" beschrieben.

Die Hydrolyse des Inulins in den Extraktpulvern erfolgte mit 0.5 %iger Salzsäure im siedenden Wasserbad während 20 Minuten (vgl. K. Täufel et al.; Nahrung 3, 701, 1959). Der Gehalt an Inulin ist aus den Gehalten von Fructose und Glucose vor und nach Hydrolyse berechnet worden, indem der Differenzbetrag, der Gehalt an hydrolysierten Zuckern, mit dem Faktor 0.9 multipliziert wurde .

Ein Ausführungsbeispiel zur Herstellung des Zichorienpulvers wird im folgenden beschrieben, wobei alle Prozente Gewichtsprozente bedeuten. Gleichfalls werden die Methoden für die analytische Untersuchung der Zichorienpulver dargelegt.

## Beispiel 1

Man arbeitet mit einem Extraktor von sechs Diffuseuren. Jeder Diffuseur enthält 120 kg Darrzichorien-Griess. Die Extraktionstemperatur ist 90°C mit einer Zykluszeit von 30 Min., wobei die Abzugsmenge 360 Liter beträgt. Der Abzugsextrakt hat einen Trockensubstanzgehalt von 20 % und die Extraktionsausbeute beträgt ca. 65 %.

Im Rohrsystem ist die Verweilzeit des Extraktes 22 Min. unter einem Druck von 5 atü mit einem Durchfluss von 800 l/h. Die Temperatur des Flüssigextraktes beträgt beim Eingang 118°C und nach dem Kühler 85°C. Der Flüssigextrakt hat einen Trockensubstanzgehalt von 18,4%.

Die Sprühtrocknung geschieht dann in klassischer Weise mit einer Zulufttemperatur von 265°C. Aus 120 kg Darrzichoriengriess mit einem Trockensubstanzgehalt von etwa 90 % erhält man durchschnittlich 70 kg grünes Zichorienpulver.

Zur Karamelisierung wird ein Doppelschneckenextruder verwendet. Die Temperatur der Segmente drei bis sechs beträgt 200°C und der Durchsatz des Pulvers zwischen 50 und 60 kg/Stunde bei einer Farbtiefe von 1,21. Der Aufenthalt im Extruder ist von ca. 30 Sek. Die Soletemperatur unter dem Band (29) beträgt 15°C und das Band läuft mit einer Geschwindigkeit von 5 m/sec. Die Zerkleinerung des erkalteten, karamelisierten Zichorienpulvers erfogt auf eine Korngrösse von < 2,0 mm .

Von den 120 kg Darrzichorien des Beginns erhält man jetzt durchschnittlich 65 kg karamelisiertes Zichorienpulver mit einem Gehalt an Inulin von 62,3 %, an reduzierenden Zuckern von 7,4 %, an Fructose und Glucose von 2,1 %.

## Beispiel 2

Die Zichorienwurzeln wurden in einer Mühle geraspelt und das Schnittgut in einer Dämpfschnecke bei Durchsätzen von 300 kg/Std. durch direkte Erhitzung mit Dampf auf Temperaturen von 60-70°C erwärmt .

Die hydraulische Oeldruckpresse wurde chargenweise mit Zichorien- Schnittgut befüllt. Für das Befüllen der Presse wurden 2 Std., für das eigentliche Abpressen wurde 1 Std. benötigt. Der Druck am Ende des Pressvorgangs betrug 200 bar. 500 kg Pressextrakt mit einem Trockensubstanzgehalt von 20,1 % und 148 kg Pressrückstand mit einem Trockensubstanzgehalt von 37.8 % wurden erhalten . Die Extraktausbeute betrug 64.3 %.

In einem Rohrsystem wurde der Pressextrakt bei einer Temperatur von 130°C und einem Druck von 5 bar nachbehandelt. Bei einem Durchsatz von 600 kg/Std. betrug die Verweilzeit des Extrakts 10 Min.

Nach dem Separieren wurde der Flüssigextrakt von einem Trockensubstanzgehalt von 20,1 % auf einen von 36.5 % aufkonzentriert und anschliessend sprühgetrocknet .

Die Karamelisierung des Extraktpulvers wurde wie unter Beispiel 1 beschrieben durchgeführt.

Die Untersuchung der Zichorienpulver umfasst die folgenden Bestimmungsmethoden:

## Trockensubstanz

Etwa 2 g Pulver werden in eine getrocknete Nickelschale genau eingewogen und 2 Std. bei 85°C im Trockenschrank getrocknet. Die Probe wird nach dem Abkühlen im Exsikkator ausgewogen.

$$\% \text{ TS} = \frac{\text{Auswaage x 100}}{\text{Einwaage}}$$

## Farbtiefe

Auf TS bezogen werden 1,0 g Pulver in ein 250 ml Becherglas eingewogen und mit destilliertem Wasser auf 100 g ergänzt. Das Gesamtgewicht von Becherglas, Glasstab, Probe und Wasser wird ermittelt und das Pulver durch Umrühren in Lösung gebracht. Die Probelösung wird auf etwa 70°C erhitzt, dann in einem kalten Wasserbad wieder abgekühlt und mit Wasser bis zum Anfangsgewicht ergänzt. Zur Messung der Farbtiefe wird die Lösung 1: 5 verdünnt ( z . B . 20 ml auf 100 ml), die verdünnte Lösung zentrifugiert und die Extinktion der klaren Lösung in 1 cm Küvetten bei 500 nm gemessen.

**Reduzierende Zucker**

Etwa 3 g Probenmaterial werden auf ± 1 mg genau und 1 g Calciumcarbonat in ein 150 ml Becherglas eingewogen. Das Gesamtgewicht von Becherglas und Glasstab wird ermittelt (G). Nach Zugabe von 70 ml Wasser wird die Suspension 30 Min bei 60°C im Thermostaten belassen. Das Gewicht wird durch Zufügen von Wasser auf ein Volumen von 100 ml ergänzt (G + 100 g). Die Lösung wird durch ein Faltenfilter filtriert und 10 ml Filtrat werden für die Zuckerbestimmung nach Potterat-Eschmann eingesetzt.

$$\% \text{ Red. Zucker in TS} = \frac{\text{mg Zucker aus Verbrauch x 100}}{\text{g Einw. x \% TS}}$$

**Fructose und Glucose**

Die für die Bestimmung der reduzierenden Zucker verwendete Lösung wird 1: 2 verdünnt und 0,1 ml der verdünnten Probelösung werden für den enzymatisch Test verwendet.

$$\% \text{ Freie Fru bzw. Glu in TS} = \frac{\text{g/l x 100 x 100}}{\text{gEinw. x 5 x \% TS}}$$

**Inulin**

Etwa 1,5 g Probenmaterial werden in einen 100 ml Messkolben auf ± 1 mg genau eingewogen und mit 75 ml 0,5%iger Salzsäure 15 min im siedenden Wasser erhitzt. Nach dem Abkühlen werden fünf Tropfen 0.5%iger Bromthymolblau-Lösung in Ethanol und 2 n Natronlauge solange hinzugegeben, bis der Indikator umschlägt (hierfür sind etwa 4,5 ml erforderlich, notfalls mit pH-Papier überprüfen). Nach Zugabe von 2 ml gesättigter Bleiacetat-Lösung wird der Messkolben bis zur Marke aufgefüllt und umgeschüttelt. Die Lösung wird durch ein Faltenfilter filtriert.

In einem 100 ml Messkolben werden 20 ml 2%ige Natriumoxalat-Lösung vorgelegt und 25 ml klares Filtrat zupipettiert. Nach Umschütteln und Auffüllen des Messkolbens mit Wasser wird die Lösung durch ein Faltenfilter filtriert. Für die enzymatischen Bestimmungen werden 20 ml der geklärten Lösung auf 100 ml verdünnt.

$$\% \text{ Gesamte Fru bzw . Glu in TS} = \frac{\text{g/1 x 20000}}{\text{g Einw. x \% TS}}$$

$$\% \text{ Inulin} = 0,9 \ (\% \text{ gesamte Glu + Fru - \% freie Glu + Fru})$$

**Patentansprüche**

1.  Wasserlösliches Zichorienpulver aus karamelisiertem Zichorien Extraktpulver, **dadurch gekennzeichnet, dass** es zwischen 40 und 65 % Inulin, zwischen 4 und 10 % reduzierenden Zuckern und weniger als 5 % Fructose und Glucose enthält und dass es eine Farbtiefe zwischen 1,0 und 2,5 aufweist.

2.  Wasserlösliches Zichorienpulver gemäss Anspruch 1, **dadurch gekennzeichnet, dass** es zwischen 50 und 65 % Inulin, zwischen 6 und 9 % reduzierenden Zuckern und weniger als 4 % Fructose und Glucose enthält und dass es eine Farbtiefe zwischen 1,2 und 1,8 aufweist.

3.  Wasserlösliches Zichorienpulver gemäss Anspurch 1, **dadurch gekennzeichnet, dass** es auch Instanströstkaffee und/oder Instanröstersatzkaffee von 5 bis 95% enthält.

4.  Verfahren zur Herstellung eines wasserlöslichen Zichorienpulvers gemäss Ansprüchen 1 und 2, **dadurch gekennzeichnet, dass** man Darrzichorie mit Wasser extrahiert oder Wurzelzichorie abpresst, den Extrakt zu einem Pulver trocknet, das Pulver in einem Extruder zwischen 180°C und 250°C bei Verweilzeiten bis zu 5 Minuten karamelisiert, kühlt und mahlt.

**5.** Verfahren gemäss Anspruch 4, **dadurch gekennzeichnet, dass** man einen Doppelschneckenextruder verwendet.

**6.** Verfahren gemäss Anspruch 4, **dadurch gekennzeichnet, dass** man die Darrzichorie in Form von Schnitzeln, Würfeln oder Griess, die Wurzelzichorie in Form von Wurzeln behandelt.

**7.** Verfahren gemäss Anspruch 4, **dadurch gekennzeichnet, dass** die Extraktgewinnung in einem Extraktor oder in einer Presse und die Extrakthydrolyse in einem Rohrextraktor geschieht.

**8.** Verfahren gemäss Anspruch 4, **dadurch gekennzeichnet, dass** der Extrakt vor der Trocknung eine Temperatur zwischen 60°C und 80°C aufweist und dass man die Trocknung durch Sprühtrocknen durchführt.

**9.** Verfahren gemäss Anspruch 4, **dadurch gekennzeichnet, dass** das Pulver vor der Karamelisierung einen Gehalt an reduzierenden Zuckern unterhalb 10%, vorzugsweise von 5 bis 8 % aufweist.

**10.** Verfahren gemäss Anspruch 4, **dadurch gekennzeichnet, dass** die Karamelisierung zwischen 200 und 240°C und bei Verweilzeiten bis 2 Minuten stattfindet.

**11.** Vorrichtung zur Durchführung des Verfahrens gemäss Ansprüchen 4 bis 10, **dadurch gekennzeichnet, dass** sie aus folgenden, durch Rohre verbundenen Elementen besteht:

- einem Extraktor (Diffuseure) oder einer Mühle, Dämpfschnecke und Presse,
- einen Separator,
- einem Rohrsystem mit Mitteln zum Erhitzen des Flüssigextraktes,
- einem Mittel zum Trocknen und für die Karamelisierung,
- einem Schneckendosierer,
- einem Doppelschneckenextruder,
- einem Kühlband und
- einem Mittel zum Mahlen.

## Claims

**1.** Water-soluble chicory powder made from caramelised chicory extract powder, **characterised in that** it contains between 40 and 65 % inulin, between 4 and 10 % reducing sugars and less than 5 % fructose and glucose and that it has a colour depth between 1.0 and 2.5.

**2.** Water-soluble chicory powder in accordance with Claim 1, **characterised in that** it contains between 50 and 65 % inulin, between 6 and 9 % reducing sugars and less than 4 % fructose and glucose and that it has a colour depth between 1.2 and 1.8.

**3.** Water-soluble chicory powder in accordance with Claim 1, **characterised in that** it also contains 5 to 95 % instant roast coffee and/or instant roast coffee substitute.

**4.** A process for preparing a water-soluble chicory powder in accordance with Claims 1 and 2, **characterised in that** dried chicory is extracted with water or root chicory is squeezed, the extract is dried to give a powder, the powder is caramelised in an extruder at between 180°C and 250°C with residence times of up to 5 minutes, cooled and ground.

**5.** A process in accordance with Claim 4, **characterised in that** a twin-screw extruder is used.

**6.** A process in accordance with Claim 4, **characterised in that** the dried chicory is treated in the form of flakes, cubes or irregular lumps and root chicory is treated in the form of roots.

**7.** A process in accordance with Claim 4, **characterised in that** the extract is obtained in an extractor or in a press and the extract is hydrolysed in a tube extractor.

**8.** A process in accordance with Claim 4, **characterised in that** the extract has a temperature between 60°C and 80°C before drying and that drying takes place by spray drying.

9. A process in accordance with Claim 4, **characterised in that** the powder before caramelising has a concentration of reducing sugars of less than 10 %, preferably 5 to 8 %.

10. A process in accordance with Claim 4, **characterised in that** caramelising takes place between 200 and 240°C and with residence times of up to 2 minutes.

11. A device for performing the process in accordance with Claims 4 to 10, **characterised in that** it consists of the following elements linked by pipes:

- an extractor (diffuser) or a mill, steam screw and press,
- a separator,
- a pipe system with agents for heating the liquid extract,
- a device for drying and for the caramelising process
- a screw feeder,
- a twin-screw extruder,
- a cooling strip and
- an agent for grinding.

**Revendications**

1. Chicorée en poudre hydrosoluble formée d'une poudre d'extrait de chicorée caramélisée, **caractérisée en ce qu'**elle contient entre 40 et 65 % d'inuline, entre 4 et 10 % de sucres réducteurs et moins de 5 % de fructose et de glucose, et **en ce qu'**elle présente une intensité de coloration comprise entre 1,0 et 2,5.

2. Chicorée en poudre hydrosoluble suivant la revendication 1, **caractérisée en ce qu'**elle contient entre 50 et 65 % d'inuline, entre 6 et 9 % de sucres réducteurs et moins de 4 % de fructose et de glucose, et **en ce qu'**elle présente une intensité de coloration entre 1,2 et 1,8.

3. Chicorée en poudre hydrosoluble suivant la revendication 1, **caractérisée en ce qu'**elle contient aussi de 5 à 95 % de café torréfié instantané et/ou d'un succédané de café torréfié instantané.

4. Procédé de production d'une chicorée en poudre hydrosoluble suivant les revendications 1 et 2, **caractérisé en ce que** l'on extrait par l'eau de la chicorée torréfiée ou on presse des racines de chicorée, on sèche l'extrait pour former une poudre, on caramélise la poudre dans une extrudeuse entre 180 °C et 250 °C avec des durées de séjour allant jusqu'à cinq minutes, on la refroidit et on la broie.

5. Procédé suivant la revendication 4, **caractérisé en ce que** l'on utilise une extrudeuse à double vis.

6. Procédé suivant la revendication 4, **caractérisé en ce qu'**on traite la chicorée torréfiée sous forme de cossettes, de dés ou de granules, et la chicorée en racines sous forme de racines.

7. Procédé suivant la revendication 4, **caractérisé en ce que** l'obtention de l'extrait a lieu dans un extracteur ou dans une presse, et l'hydrolyse de l'extrait a lieu dans un extracteur tubulaire.

8. Procédé suivant la revendication 4, **caractérisé en ce que** l'extrait avant le séchage présente une température comprise entre 60 °C et 80 °C et **en ce que** le séchage est effectué par atomisation.

9. Procédé suivant la revendication 4, **caractérisé en ce que** la poudre avant la caramélisation présente une teneur en sucres réducteurs inférieure à 10 %, de préférence comprise entre 5 et 8 %.

10. Procédé suivant la revendication 4, **caractérisé en ce que** la caramélisation a lieu entre 200 et 240 °C et pendant des durées de séjour allant jusqu'à deux minutes.

11. Dispositif pour la mise en oeuvre du procédé suivant les revendications 4 à 10, **caractérisé en ce qu'**il est constitué des éléments suivants, communiquant par des tubes :

- un extracteur (diffuseurs) ou un moulin, un vaporiseur à vis sans fin et une presse,

- un séparateur,
- un système tubulaire comportant des moyens de chauffage de l'extrait liquide,
- un moyen destiné au séchage et permettant la caramélisation,
- un doseur à vis sans fin,
- une extrudeuse à deux vis,
- une bande refroidissante, et
- un moyen de broyage.

FIG. 1

FIG. 2

EP 0 808 108 B1

FIG. 3

FIG. 4